# EUROPEAN PATENT APPLICATION

(11) **EP 4 459 554 A1**
(43) Date of publication of application: **06.11.2024**
(21) Application number: 22915970.2
(22) Date of filing: 23.12.2022
(51) Int. Cl.: G06T 7/70

(54) **INFORMATION PROCESSING SYSTEM, INFORMATION PROCESSING METHOD, AND PROGRAM**

(30) Priority: 29.12.2021 IT 202100032969
(71) Applicant: Sony Interactive Entertainment Inc., Tokyo 108-0075 (JP); Fondazione Istituto Italiano di Tecnologia, 16163 Genova (IT)
(72) Inventor: SATO, Shogo, Tokyo 108-0075 (JP); INADA, Tetsugo, Tokyo 108-0075 (JP); SEGAWA, Hiroyuki, Tokyo 108-0075 (JP); PASQUALE, Giulia, 16163 Genova (IT); ONYSHCHUK, Yuriy, 16163 Genova (IT); MALAFRONTE, Damiano, 16163 Genova (IT); NATALE, Lorenzo, 16163 Genova (IT); RUZZENENTI, Andrea, 16163 Genova (IT)
(74) Representative: D Young & Co LLP
(86) International application number: PCT/JP2022/047713
(87) International publication number: WO 2023/127747

(57) **Abstract**

To improve accuracy of estimating a pose of a photographed object, provided is target region acquisition means (21) determines whether or not the input image includes an image of a target object by inputting at least a part of an input image to a classification model trained based on a plurality of learning images including an image in which a target object has been photographed and label data indicating whether or not each of the learning images includes the target object, and acquires a target region including the image of the target object, which is extracted from the input image. Pose estimation means (25) estimates a pose of the target object based on information output by a machine learning model, when the acquired target region is input thereto, which is trained by: a plurality of training images rendered by a three-dimensional shape model of the target object; and ground truth data being information relating to the pose of the target object in the training images.

## Description

### Technical Field

The present invention relates to an information processing system, an information processing method, and a program.

### Background Art

There has been developed a method of estimating a pose (to be accurate, relative position and pose as viewed from a camera) of a photographed object through use of a machine learning model. Training data for training this machine learning model includes a CG image rendered based on a three-dimensional model of the object. The purpose thereof is to, for example, secure an amount of training data and easily acquire information (for example, key points) relating to the pose serving as ground truth data.

Sida Peng et al. published the article "PVNet: Pixel-Wise Voting Network for 6DoF Pose Estimation" at the 2019 IEEE/CVF Conference on Computer Vision and Pattern Recognition (CVPR). In this article, there is disclosed a technology involving: inputting an image to a machine learning model; and calculating positions of key points on the image to be used for pose estimation based on output of the machine learning model.

In US 2021/0031110 A1, there is disclosed a technology involving: recognizing a pose of an object held by a hand from an image in which the object has been photographed; and using the pose in a video game.

### Summary of Invention

### Technical Problem

In the related art, for example, due to difficulty in adding an appropriate label to an actually photographed image, a machine learning model has been trained by training data including CG images, and actually photographed images have been input to the machine learning model that has been trained, to thereby estimate a pose. Then, a problem ascribable thereto has been liable to occur in accuracy of pose estimation.

The present invention has been made in view of the above-mentioned circumstances, and an object thereof is to provide a technology for improving accuracy of pose estimation by a machine learning model.

### Solution to Problem

In order to solve the above-mentioned problem, according to the present invention, there is provided an information processing system including: target region acquisition means for: acquiring an input image; determine whether or not the input image includes an image of a target object by inputting at least a part of the input image to a classification model trained based on a plurality of learning images including an image in which the target object has been photographed and label data indicating whether or not each of the plurality of learning images includes the target object; and acquiring a target region including the image of the target object, which is extracted from the input image, when the input image includes the target object; and pose estimation means for estimating a pose of the target object based on information output by a machine learning model, when the acquired target region is input thereto, which is trained by: a plurality of training images rendered by a three-dimensional shape model of the target object; and ground truth data being information relating to the pose of the target object in the training images.

In one aspect of the present invention, the target region acquisition means may be configured to extract a region including an image of an object from the input image, the classification model may include: a feature generating unit configured to generate a feature value of an image of at least a part of the extracted region; and a classifier configured to receive input of the generated feature value, and output information indicating whether or not the extracted region has the image of the target object, and the classifier may be trained by training data including the feature value generated from the image in which the target object has been photographed and the label data.

In one aspect of the present invention, the feature generating unit may be adjusted so that a distance between feature values generated from a plurality of images including the target object becomes smaller than a distance between the feature value generated from an image including the target object and a feature value generated from an image including an object different from the target object.

In one aspect of the present invention, the machine learning model may be trained by training data including: the plurality of training images rendered by the three-dimensional shape model of the target object; and the ground truth data indicating positions of key points of the target object in the training images, the pose estimation means may be configured to acquire information indicating two-dimensional positions of the key points of the target object in the target region by inputting the acquired target region to the machine learning model, and the pose estimation means may be configured to estimate the pose of the target object based on the information indicating the two-dimensional positions of the key points and information indicating three-dimensional positions of the key points in the three-dimensional shape model.

In one aspect of the present invention, the machine learning model may be trained by a plurality of training images rendered by a three-dimensional model of the target object and a ground truth images in which each of pixels indicates a positional relationship with respect to the key point of the target object in the training images, the pose estimation means may be configured to acquire a positional image in which each of pixels indicates the positional relationship with respect to the key point of the target object by inputting the acquired target region to the machine learning model, the pose estimation means may be configured to calculate, based on the positional image, the position of the key point of the target object in the positional image, and the pose estimation means may be configured to estimate the pose of the target object based on the calculated position of the key point in the positional image and the three-dimensional model.

In one aspect of the present invention, the target region acquisition means may be configured to generate a mask image for masking a region other than the image of the target object in the target region, the pose estimation means may be configured to mask a part of the positional image based on the mask image, and the pose estimation means may be configured to acquire, based on the masked positional image, the position of the key point of the target object in the positional image.

In one aspect of the present invention, the information processing system may further include: photographed image acquisition means for acquiring a plurality of photographed images obtained through photographing from a plurality of directions with respect to the target object; shape model generation means for calculating the three-dimensional shape model of the target object based on the plurality of photographed images; and classification training means for training, by training data including the ground truth data and the input data corresponding to the plurality of photographed images, the classification model for determining whether or not the input image includes the image of the target object.

In one aspect of the present invention, the shape model generation means may be configured to generate information indicating the pose of the target object in the photographed image, and the information processing system may further include pose training means for training the machine learning model by: the training images including a plurality of images rendered by the three-dimensional shape model and the plurality of photographed images; and the ground truth data being the information relating to the pose of the target object in the training images.

In one aspect of the present invention, the information processing system may further include training data generation means for acquiring, from the plurality of photographed images obtained through photographing, a photographed image from which an image of a hand has been removed, and generating a training image including the photographed image from which the image of the hand has been removed and the ground truth data.

In one aspect of the present invention, the machine learning model may include a neural network formed of a plurality of layers including an input layer, an intermediate layer, and an output layer, and the machine learning model may be trained in advance by preliminary training data including a plurality of training images regarding an object different from the target object and the ground truth data, and then may be trained by the plurality of training images regarding the target object and the ground truth data with a parameter fixed for one or a plurality of layers excluding the output layer and including the input layer.

Further, according to the present invention, there is provided an information processing method including the steps of: acquiring an input image; determining whether or not the input image includes an image of a target object by inputting at least a part of the input image to a classification model trained based on a plurality of learning images including an image in which the target object has been photographed and label data indicating whether or not each of the plurality of learning images includes the target object; acquiring a target region including the image of the target object, which is extracted from the input image, when the input image includes the target object; and estimating a pose of the target object based on information output by a machine learning model, when the acquired target region is input thereto, which is trained by: a plurality of training images rendered by a three-dimensional shape model of the target object; and ground truth data being information relating to the pose of the target object in the training images.

Further, according to the present invention, there is provided a program for causing a computer to execute the processes of: acquiring an input image; determining whether or not the input image includes an image of a target object by inputting at least a part of the input image to a classification model trained based on a plurality of learning images including an image in which the target object has been photographed and label data indicating whether or not each of the plurality of learning images includes the target object; acquiring a target region including the image of the target object, which is extracted from the input image, when the input image includes the target object; and estimating a pose of the target object based on information output by a machine learning model, when the acquired target region is input thereto, which is trained by: a plurality of training images rendered by a three-dimensional shape model of the target object; and ground truth data being information relating to the pose of the target object in the training images.

### Advantageous Effects of Invention

According to the present invention, it is possible to improve accuracy of estimating the pose of the photographed object.

### Brief Description of Drawings

[FIG. 1] A diagram for illustrating an example of a configuration of an information processing system according to one embodiment of the present invention.
[FIG. 2] A functional block diagram for illustrating an example of functions implemented in the information processing system according to the one embodiment of the present invention.
[FIG. 3] A view for illustrating an example of an input image.
[FIG. 4] A view for illustrating an example of key points of a target object.
[FIG. 5] A diagram for schematically illustrating an example of a positional image in a target region.
[FIG. 6] A flow chart for illustrating an example of processing of a target region acquisition unit and a pose estimation unit.
[FIG. 7] A diagram for illustrating an example of a configuration of a classification model.
[FIG. 8] A diagram for illustrating an example of a mask image for the target region.
[FIG. 9] A view for illustrating a pose of the target object that has been detected.
[FIG. 10] A flow chart for illustrating an example of processing for training a machine learning model and a classifier.
[FIG. 11] A view for illustrating photographing of the target object.
[FIG. 12] A diagram for illustrating an example of a configuration of the machine learning model.
[FIG. 13] A diagram for illustrating a configuration of the machine learning model.

### Description of Embodiments

Now, one embodiment of the present invention is described in detail with reference to the drawings. In this embodiment, description is given of an information processing system for inputting an image in which an object has been photographed and estimating a pose thereof. This information processing system estimates the pose through use of a machine learning model trained by input data based on the image in which the object has been photographed. In this embodiment, the information processing system is also configured to complete the training in a short time period. A required time period is assumed to be, for example, several tens of seconds for grasping and rotating the object, and several minutes for machine learning.

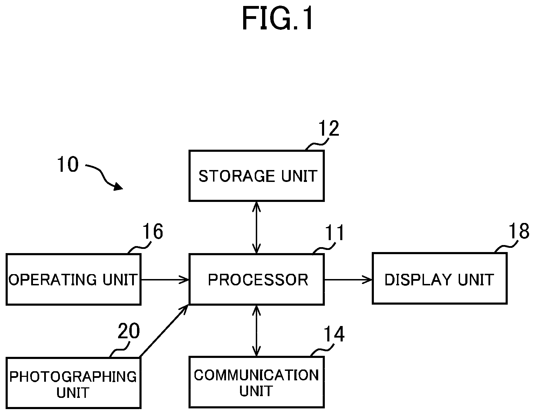

FIG. 1 is a diagram for illustrating an example of a configuration of an information processing system according to the one embodiment of the present invention. The information processing system according to this embodiment includes an information processing device 10. The information processing device 10 is, for example, a computer such as a game console or a personal computer. As illustrated in FIG. 1, the information processing device 10 includes, for example, a processor 11, a storage unit 12, a communication unit 14, an operating unit 16, a display unit 18, and a photographing unit 20. The information processing system may be formed of one information processing device 10, or may be formed of a plurality of devices including the information processing device 10.

The processor 11 is, for example, a program control device, such as a CPU, which operates in accordance with a program installed in the information processing device 10.

The storage unit 12 is formed of at least a part of a storage element such as a ROM or a RAM and an external storage device, for example, a solid-state drive. The storage unit 12 stores, for example, a program to be executed by the processor 11.

The communication unit 14 is, for example, a communication interface for wired communication or wireless communication, such as a network interface card, and exchanges data with another computer or another terminal through a computer network such as the Internet.

The operating unit 16 is, for example, an input device such as a keyboard, a mouse, a touch panel, or a controller of the game console, and receives input of an operation performed by a user, and outputs a signal indicating details thereof to the processor 11.

The display unit 18 is a display device, for example, a liquid crystal display, and displays various images in accordance with instructions issued by the processor 11. The display unit 18 may be a device for outputting a video signal to an external display device.

The photographing unit 20 is a photographing device, for example, a digital camera. The photographing unit 20 in this embodiment is a camera capable of photographing a moving image. The photographing unit 20 may be a camera capable of acquiring a visible RGB image and depth information synchronized with the RGB image. The photographing unit 20 may be provided outside the information processing device 10, and in this case, the information processing device 10 and the photographing unit 20 may be connected to each other through the communication unit 14 or an input/output unit described later.

The information processing device 10 may include an audio input/output device such as a microphone or a speaker. In addition, the information processing device 10 may include, for example, a communication interface such as a network board, an optical disc drive for reading an optical disc such as a DVD-ROM or a Blu-ray (trademark) disc, and the input/output unit (universal serial bus (USB) port) for inputting/outputting data to/from an external device.

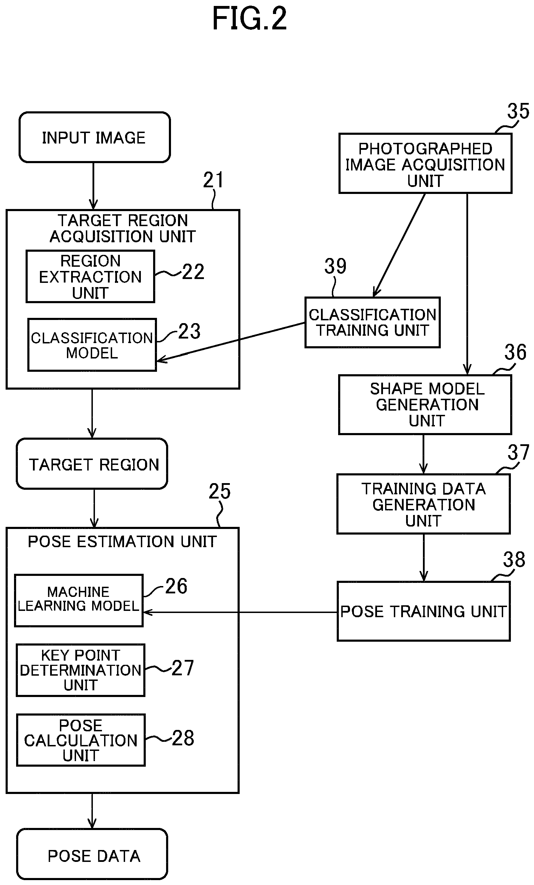

FIG. 2 is a functional block diagram for illustrating an example of functions implemented in the information processing system according to the one embodiment of the present invention. As illustrated in FIG. 2, the information processing system functionally includes a target region acquisition unit 21, a pose estimation unit 25, a photographed image acquisition unit 35, a shape model generation unit 36, a training data generation unit 37, a pose training unit 38, and a classification training unit 39. The target region acquisition unit 21 functionally includes a region extraction unit 22 and a classification model 23. The pose estimation unit 25 functionally includes a machine learning model 26, a key point determination unit 27, and a pose calculation unit 28.

Those functions are implemented mainly by the processor 11 and the storage unit 12. More specifically, those functions may be implemented by the processor 11 executing a program which is installed in the information processing device 10 being a computer, and includes execution instructions corresponding to the above-mentioned functions. In addition, this program may be supplied to the information processing device 10, for example, through intermediation of a computer-readable information storage medium such as an optical disc, a magnetic disk, or a flash memory, or through the Internet or the like.

Not all the functions illustrated in FIG. 2 are not required to be implemented in the information processing system according to this embodiment, and functions other than the functions illustrated in FIG. 2 may be implemented therein.

The target region acquisition unit 21 acquires an input image obtained through photographing by the photographing unit 20, and inputs at least a part of the input image to the classification model 23, to thereby determine whether or not the input image includes an image of a target object 51. In addition, when the input image includes the target object 51, a target region 55 including the image of the target object 51, which is extracted from the input image, is acquired. The target object 51 is an object serving as a target to be subjected to pose estimation in the information processing device 10. The target object 51 is a target of preliminary learning.

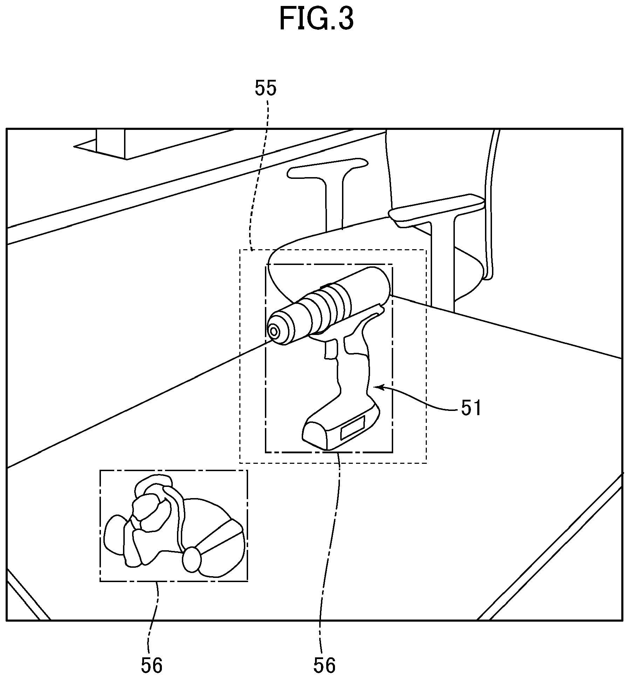

FIG. 3 is a view for illustrating an example of the input image. In the example of FIG. 3, the target object 51 is a power tool, and in the subsequent drawings, the example of the target object 51 is also assumed to be the power tool unless otherwise specified. The input image has been obtained through photographing by the photographing unit 20, and the target region 55 is a rectangular region including the target object 51 and its vicinity. In a process of acquiring the target region 55, one or a plurality of candidate regions 56 including the region that does not include the target object 51 as well are also extracted as candidates for a region including the target object 51. Details of the candidate region 56 are described later.

When the classification model 23 receives input of an image, the classification model 23 outputs information indicating whether or not the image includes the image of the target object 51. The classification model 23 is trained by training data including a plurality of learning images including an image in which the target object 51 has been photographed and label data indicating whether or not each of the learning images includes the target object 51. Details of the classification model 23 are described later.

The region extraction unit 22 extracts an image to be input to the classification model 23 from the input image. More specifically, the region extraction unit 22 identifies one or a plurality of candidate regions 56 in which some object has been photographed from the input image by a known Region Proposal technology, and each of the one or the plurality of candidate regions 56 is extracted as the image to be input to the classification model 23. The learning image for the classification model 23 may be an image of a partial region in which the target object 51 is present in the image obtained through photographing, in accordance with the region extraction unit 22. The region extraction unit 22 may be omitted, and the input image may be directly input to the classification model 23.

The pose estimation unit 25 estimates the pose of the target object 51 based on information output when the target region 55 is input to the machine learning model 26. The machine learning model 26 is trained by a plurality of learning images rendered by a three-dimensional shape model of the target object 51 and ground truth data being information relating to the pose of the target object 51 in the learning images.

More specifically, the machine learning model 26 is trained by the training data including a plurality of learning images rendered by the three-dimensional shape model of the target object 51 and the ground truth data indicating positions of key points of the target object 51 in the learning images. The key point is a virtual point in the target object 51, and is a point to be used for calculating the pose.

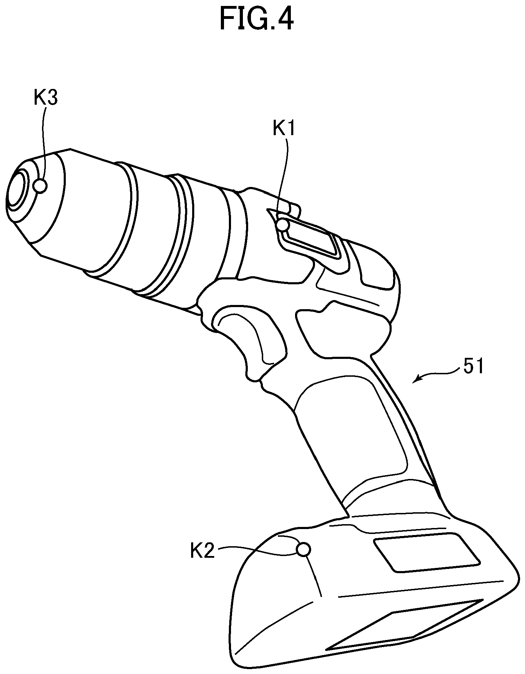

FIG. 4 is a view for illustrating an example of the key points of the target object 51. Three-dimensional positions of the key points of the target object 51 are determined from the three-dimensional shape model of the target object 51 (more specifically, information on vertices included in the three-dimensional shape model) by, for example, a known Farthest Point algorithm. Three key points K1 to K3 are illustrated in FIG. 4 for the sake of simplicity of description, but the actual number of key points may be larger. For example, in this embodiment, the actual number of key points of the target object 51 is eight.

The machine learning model 26 that has been trained outputs information indicating two-dimensional positions of the key points of the target object 51 in the target region 55 when the machine learning model 26 receives input of the target region 55. From the two-dimensional positions of the key points in the target region 55 and the position of the target region 55 in the input image, two-dimensional positions of the key points in the input image are obtained.

Data indicating the position of the key point may be a positional image in which each of pixels indicates a positional relationship (for example, direction) between the each of the pixels and the key point, may be an image, for example, a heat map, indicating the position of the key point, or may be coordinates of each key point itself. The following description is mainly given of a case in which the data indicating the position of the key point is the image in which each of pixels indicates the positional relationship between the each of the pixels and the key point.

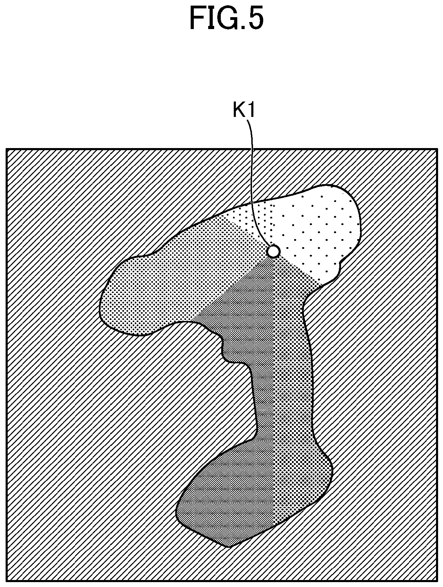

FIG. 5 is a diagram for schematically illustrating an example of the positional image in the target region 55. The positional image may be generated for each type of key point. The positional image indicates a relative direction at each of pixels between the each of the pixels and the key point. In the positional image illustrated in FIG. 5, a pattern corresponding to a value of each of the pixels is illustrated, and the value of each of pixels indicates the direction between coordinates of the each of the pixels and the coordinates of the key point. FIG. 5 is merely a schematic diagram, and an actual value of each pixel changes continuously. Although not explicitly illustrated in the figure, the positional image is a vector field image indicating a relative direction of the key point at each pixel with the each pixel being used as a reference.

The key point determination unit 27 determines the two-dimensional position of the key point in the target region 55 and the input image based on output of the machine learning model 26. More specifically, for example, the key point determination unit 27 calculates candidates for the two-dimensional position of the key point in the target region 55 based on the positional image output from the machine learning model 26, and determines the two-dimensional position of the key point in the input image from the calculated candidates for the two-dimensional position. For example, the key point determination unit 27 calculates a candidate point for the key point from each combination of freely-selected two points in the positional image, and generates, for a plurality of candidate points, a score indicating whether or not there is a match with a direction indicated by each of the pixels in the positional image. The key point determination unit 27 may estimate a candidate point having the highest score as the position of the key point. The key point determination unit 27 further repeats the above-mentioned processing for each key point.

The pose calculation unit 28 estimates the pose of the target object 51 based on the information indicating the two-dimensional positions of the key points in the input image and information indicating the three-dimensional positions of the key points in the three-dimensional shape model of the target object 51, and outputs pose data indicating the estimated pose. The pose of the target object 51 is estimated by a known algorithm. For example, the pose of the target object 51 may be estimated by a solution to a Perspective-n-Point (PNP) problem regarding pose estimation (for example, EPnP). In addition, the pose calculation unit 28 may estimate not only the pose of the target object 51 but also the position of the target object 51 in the input image, and the pose data may include information indicating the position.

The machine learning model 26, the key point determination unit 27, and the pose calculation unit 28 may be those described in the article "PVNet: Pixel-Wise Voting Network for 6DoF Pose Estimation."

When the machine learning model 26 receives the input of the target image, the machine learning model 26 may directly output the pose of the target object 51. In this case, the key point determination unit 27 is not required, and the pose calculation unit 28 obtains the pose and position of the target object 51 in the input image based on the pose and position of the target object 51 that have been calculated for the target region 55.

In this embodiment, the target object 51 is photographed, and a classifier 32 and the machine learning model 26 are trained in a short time period, for example, several seconds and several minutes, respectively, based on the image in which the target object 51 has been photographed. The photographed image acquisition unit 35, the shape model generation unit 36, the training data generation unit 37, the pose training unit 38, and the classification training unit 39 are configured to be used for training thereof.

The photographed image acquisition unit 35 acquires photographed images in which the target object 51 has been photographed by the photographing unit 20 in order to train the machine learning model 26 included in the pose estimation unit 25 and/or the classification model 23 included in the target region acquisition unit 21. It is assumed that the photographing unit 20 has acquired a camera intrinsic parameter by calibration in advance. This parameter is used for solving the PnP problem.

The shape model generation unit 36, the training data generation unit 37, and the pose training unit 38 execute processing for training the machine learning model 26 included in the pose estimation unit 25.

More specifically, the shape model generation unit 36 extracts a plurality of feature vectors indicating local features for each of the plurality of photographed images of the target object 51 acquired by the photographed image acquisition unit 35. Then, from a plurality of feature vectors corresponding to each other, which have been extracted from the plurality of photographed images, and positions at which the feature vectors have been extracted in the photographed images, the shape model generation unit 36 obtains the three-dimensional positions of points at which the feature vectors have been extracted, and acquires the three-dimensional shape model of the target object 51 based on the three-dimensional positions. This method is a known method that is also used in software implementing a so-called SfM or Visual SLAM, and hence a detailed description thereof is omitted.

The training data generation unit 37 generates training data for training the machine learning model 26. More specifically, the training data generation unit 37 generates training data including a rendered training image and ground truth data indicating the positions of the key points from the three-dimensional shape model of the target object 51. The training data generation unit 37 also generates: ground truth data from the pose of the target object 51 obtained by a DLT method or the like when the three-dimensional shape model is calculated from photographed images; and training data formed of a region including the target object 51 from the photographed images, and adds the ground truth data and the training data to the training data.

The pose training unit 38 trains the machine learning model 26 included in the pose estimation unit 25 by the training data generated by the training data generation unit 37.

The classification training unit 39 trains the classification model 23 included in the target region acquisition unit 21 based on the photographed images acquired by the photographed image acquisition unit 35. Details of the classification training unit 39 are described later.

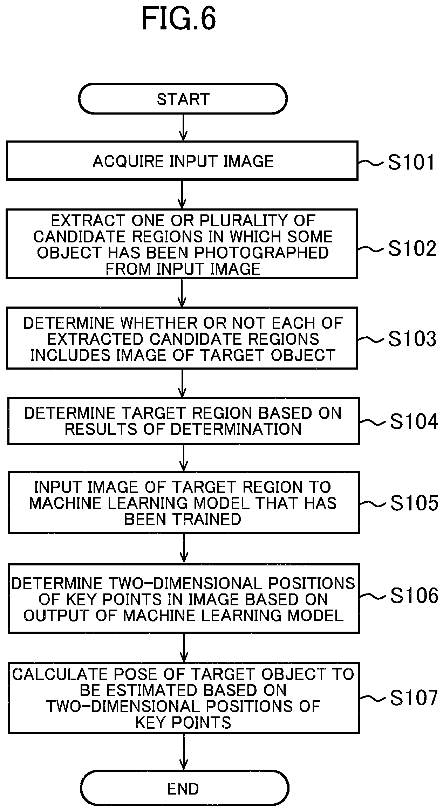

Next, processing relating to pose estimation is described. FIG. 6 is a flow chart for illustrating an example of processing of the target region acquisition unit 21 and the pose estimation unit 25. The processing illustrated in FIG. 6 may be repeatedly executed on a regular basis.

First, the region extraction unit 22 included in the target region acquisition unit 21 acquires an input image obtained through photographing by the photographing unit 20 (S101). The region extraction unit 22 may acquire an input image by directly receiving the input image from the photographing unit 20, or may acquire an input image received from the photographing unit 20 and stored in the storage unit 12.

The region extraction unit 22 extracts one or a plurality of candidate regions 56 in which some object has been photographed from the input image (S102). The region extraction unit 22 may include a regional proposal network (RPN) trained in advance. The RPN may be trained by training data irrelevant to the image in which the target object 51 has been photographed. This processing reduces computational waste, and ensures a certain degree of robustness to an environment.

In this case, the region extraction unit 22 may further execute image processing including background removal processing (mask processing) and size adjustment on the image of the extracted candidate region 56. In addition, the processed image of the candidate region 56 may be used for the subsequent processing. With this processing, it is possible to reduce a domain gap due to the background and lighting conditions, and to train the classifier 32 by a small amount of training data.

The target region acquisition unit 21 determines whether or not each of the candidate regions 56 includes the image of the target object 51 (S103). This processing includes processing for acquiring output obtained when the target region acquisition unit 21 inputs the image of the candidate region 56 to the classification model 23.

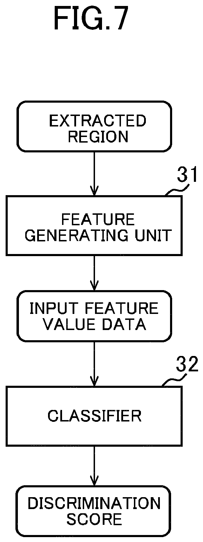

FIG. 7 is a diagram for illustrating an example of the classification model 23. The classification model 23 includes a feature generating unit 31 and the classifier 32.

The feature generating unit 31 outputs, from the image of the candidate region 56, a feature value corresponding to the image. The feature generating unit 31 includes a convolutional neural network (CNN) that has been trained. This CNN outputs, in response to input of an image, feature value data (input feature value data) indicating a feature value corresponding to the image. The feature generating unit 31 may extract the feature value from the image of the candidate region 56 extracted by the RPN, or may acquire the feature value extracted in the processing of the RPN, for example, a Faster R-CNN.

The classifier 32 is, for example, a support vector machine (SVM), and is a kind of machine learning model. In response to input of the input feature value data indicating the feature value corresponding to the image of the candidate region 56, the classifier 32 outputs a discrimination score indicating a probability that an object photographed in the candidate region 56 belongs to a positive class in the classifier 32. The classifier 32 is trained by a plurality of pieces of positive example training data regarding positive examples and a plurality of negative example training data regarding negative examples. The positive example training data is generated from a learning image including the image in which the target object 51 has been photographed, and the negative example training data is generated from an image of an object different from the target object 51, the image being provided in advance. The negative example training data may be generated by photographing an environment of the photographing unit 20, which has been photographed by the photographing unit 20.

In this case, metric learning may be executed in advance on the CNN of the feature generating unit 31. Tuning may be performed by preliminary metric learning so that the feature value data indicating feature values close to each other is output from images in which objects belonging to the positive class in the classifier 32 are photographed. The feature value indicated by the feature value data in this embodiment is, for example, a vector quantity normalized to have a norm of 1. This metric learning may be performed before the image of the target object 51 is obtained through photographing.

In this embodiment, this CNN is used to generate feature value data indicating the feature values corresponding to the images subjected to the execution of normalization processing. The CNN subjected to the execution of metric learning in advance is used, to thereby aggregate the feature values of samples belonging to one class in a compact region irrespective of conditions. As a result, the information processing device 10 in this embodiment can determine an appropriate discrimination boundary in the classifier 32 even from a small number of samples. The feature generating unit 31 may output, by another known algorithm for calculating the feature value indicating the feature of the image, the feature value data indicating the feature value corresponding to an image in response to the input of the image.

For example, when the discrimination score is larger than a threshold value, the target region acquisition unit 21 determines that the relevant candidate region 56 includes the image of the target object 51.

After it has been determined whether or not each of the candidate region 56 includes the image of the target object 51, the target region acquisition unit 21 determines the target region 55 based on results of the determination (S104). More specifically, the target region acquisition unit 21 acquires, based on the candidate region 56 determined to include the target object 51, a rectangular region including a region in a vicinity of the target object 51 as the target region 55. The target region acquisition unit 21 may acquire a square region including a region in the vicinity of the target object 51 as the target region 55, or may simply acquire the candidate region 56 as the target region 55. The target region acquisition unit 21 is not always required to acquire the target region 55 by the processing steps of S102 and S103. For example, the target region acquisition unit 21 may acquire the target region 55 by performing known time-series tracking processing on the input image acquired after the target region 55 has been acquired once.

In this case, the target region acquisition unit 21 generates a mask image for masking an image other than the image of the target object 51 in the target region 55. The target region acquisition unit 21 may use a known method to generate a mask image for masking the background from the image of the target region 55. The image to be input to the classification model 23 may be processed so as to exclude the image of the background, and the target region acquisition unit 21 may also generate, during the processing, a mask image by adjusting a size or the like of the mask image generated by a known method.

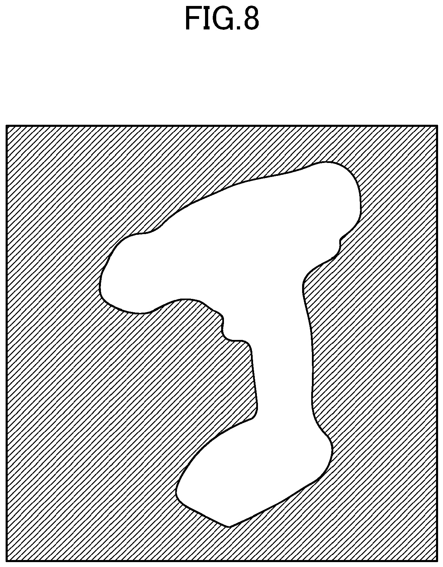

FIG. 8 is a diagram for illustrating an example of a mask image for the target region 55. In the example of FIG. 8, a region corresponding to the image of the target object 51 is shown in white. The mask image is used in the processing relating to the generation of the positional image performed by the machine learning model 26.

The pose estimation unit 25 inputs an image of the target region 55 to the machine learning model 26 that has been trained (S105) . The image of the target region 55 input in this step may be an image having the size adjusted (enlarged or reduced) in accordance with the size of the input image of the machine learning model 26. Through the size adjustment (normalization), learning efficiency of the machine learning model 26 is improved.

The pose estimation unit 25 may mask the background of the image of the target region 55 through use of the mask image, and input the image of the target region 55 having the background masked to the machine learning model 26. The pose estimation unit 25 may also mask the positional image output from the machine learning model 26 through use of the mask image. In the latter mask method, it is possible to prevent an influence of estimation of the key point on the background while generating the positional image through use of an image near a boundary between the background and the target object 51. This improves accuracy of estimating key points. Both the image to be input to the machine learning model 26 and the image to be output therefrom may also be masked.

The key point determination unit 27 included in the pose estimation unit 25 determines the two-dimensional positions of the key points in the target region 55 and the input image based on the output of the machine learning model 26 (S106). In case that the output of the machine learning model 26 is the positional image, the key point determination unit 27 calculates a candidate for the position of the key point from each pixel in the positional image, and determines the position of the key point based on the candidate. In case that the output of the machine learning model 26 is the position of the key point in the target region 55, the position of the key point in the input image may be calculated from that position. The processing steps of S105 and S106 are performed for each type of key point.

The pose calculation unit 28 included in the pose estimation unit 25 calculates the pose of the target object 51 to be estimated based on the determined two-dimensional positions of the key points (S107). The pose calculation unit 28 may calculate the position of the target object 51 together with the pose. The pose and position may be calculated by the above-mentioned solution of the PNP problem.

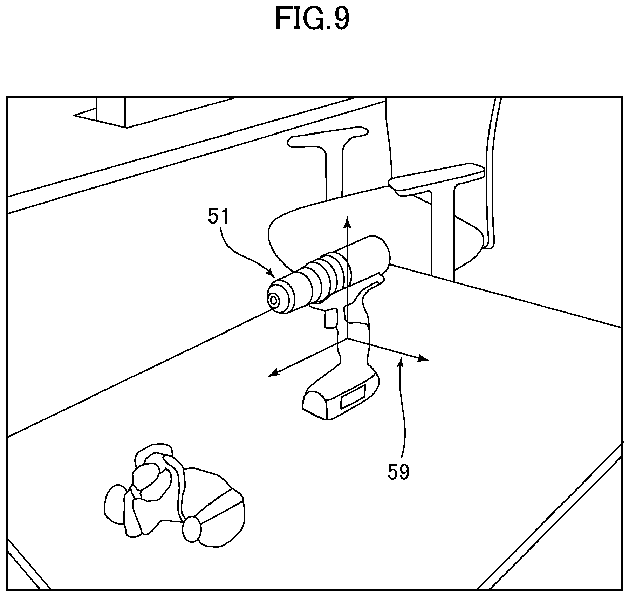

FIG. 9 is a view for illustrating a pose of the target object 51 that has been detected. In FIG. 9, for the sake of simplicity of description, the pose of the target object 51 is represented by local coordinate axes 59 indicating a local coordinate system of the target object 51. The position of the origin of the local coordinate axes 59 indicates the position of the target object 51, and the directions of the lines of the local coordinate axes 59 indicate the pose.

The estimated pose and position of the target object 51 may be used for various purposes. For example, the pose and position may be input to application software, for example, a game, instead of operation information input by the controller. Then, the processor 11 executing an execution code of the application software may generate data on the image based on the pose (and position), and cause the display unit 18 to output the image. The processor 11 may also cause the information processing device 10 or an audio output device connected to the information processing device 10 to output a sound based on its pose (and position). In another case, the processor 11 may, for example, notify an AI agent (such as a robot) of the position and pose of the object, to thereby control an operation of the AI agent to cause the object to be grasped.

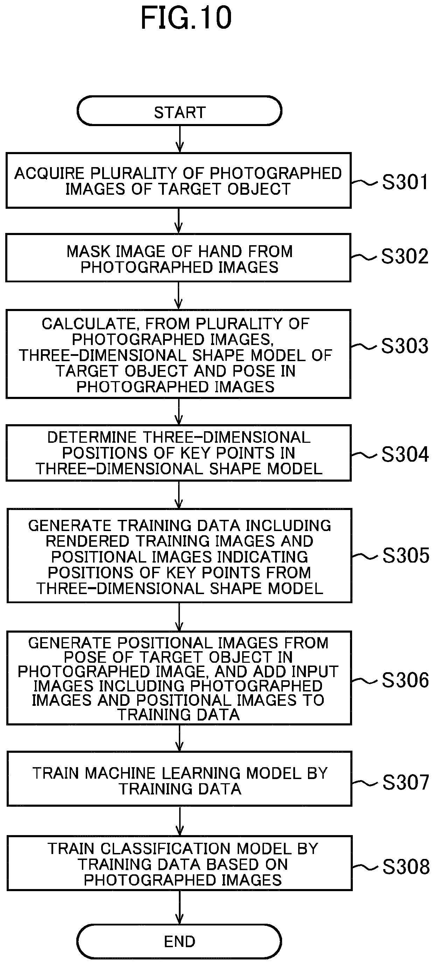

Next, training processing of the machine learning model 26 and the classifier 32 is described. FIG. 10 is a flow chart for illustrating an example of processing for training the machine learning model 26 and the classifier 32.

First, the photographed image acquisition unit 35 acquires a plurality of photographed images in which the target object 51 has been photographed (S301).

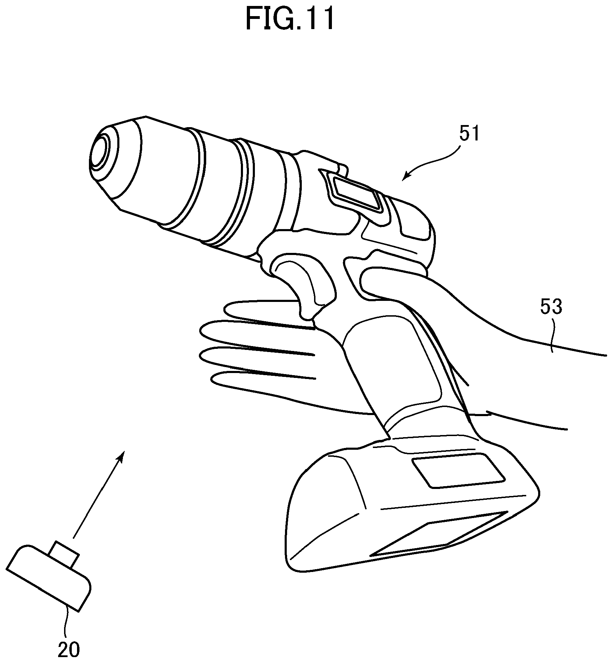

FIG. 11 is a view for illustrating photographing of the target object 51. The target object 51 is held by, for example, a hand 53, and is photographed by the photographing unit 20. In this embodiment, it is desired to photograph the target object 51 from various directions. Accordingly, the photographing unit 20 changes a photographing direction of the target object 51 while periodically photographing an image as in a case of a videography. For example, the photographing direction of the target object 51 may be changed by changing the pose of the target object 51 by the hand 53. In another case, the photographing direction may be changed by placing the target object 51 on an AR marker and moving the photographing unit 20. An acquisition interval between the photographed images to be used in the processing described later may be longer than a photographing interval of the videography.

After the photographed images have been acquired, the photographed image acquisition unit 35 masks the image of the hand 53 from those photographed images (S302). The image of the hand 53 may be masked by a known method. For example, the photographed image acquisition unit 35 may mask the image of the hand 53 by detecting a skin color region included in the photographed image.

Then, the shape model generation unit 36 calculates the three-dimensional shape model of the target object 51 and the pose in the respective photographed images from the plurality of photographed images (S303). This processing may be performed by the above-mentioned known method also used in software implementing a so-called SfM or Visual SLAM. The shape model generation unit 36 may calculate the pose of the target object 51 based on a logic for calculating the photographing direction of the camera by this method.

After the three-dimensional shape model of the target object 51 has been calculated, the shape model generation unit 36 determines the three-dimensional positions of a plurality of key points to be used for estimating the pose of the three-dimensional shape model (S304). The shape model generation unit 36 may determine the three-dimensional positions of a plurality of key points by, for example, a known Farthest Point algorithm.

After the three-dimensional positions of the key points are calculated, the training data generation unit 37 generates training data including a plurality of training images and a plurality of positional images (S305). More specifically, the training data generation unit 37 generates a plurality of training images rendered from the three-dimensional shape model, and generates positional images indicating the positions of the key points in the plurality of training images. The plurality of training images are rendered images of the target object 51 viewed from a plurality of different directions, and the positional image is generated for each combination of the training image and the key point. The training image may be a rendered image subjected to a so-called domain randomization or a photograph-like image rendered together with the image of the background. The training image may be an image having the background masked.

The training data generation unit 37 virtually projects the position of the key point on the rendered training image, and generates a positional image based on a relative position between the projected position of the key point and each pixel in the image. The training data to be used for training the machine learning model 26 includes the training images and the positional images.

The training data generation unit 37 further generates sets of a training image including at least a part of the photographed image and a positional image, and adds those sets to the training data (S306). The training data generation unit 37 generates a positional image based on the pose and position of the target object 51 in each photographed image. The pose and position of the target object 51 have been calculated by the shape model generation unit 36. For example, the training data generation unit 37 may generate a rendered image of the target object 51 in the photographed image regarding the pose and position thereof, and generate a positional image for the photographed image based on the rendered image by the same method as that of S305. The training image may be an image obtained by masking the background of the photographed image.

In the training images included in the training data, the number of rendered images is larger than the number of images formed of at least a partial region of the photographed image. This is because it is possible to easily generate images viewed from various photographing directions through use of a three-dimensional shape model while it is difficult to acquire photographed images obtained through photographing from various photographing directions in a short time period. Meanwhile, the images formed of at least a partial region of the photographed image are used for training the machine learning model 26, to thereby adapt the machine learning model 26 not only to a rendered image but also to an actually photographed image. This enables improvement in accuracy of the machine learning model 26 that has been trained. The plurality of training images included in the training data may be only rendered images despite slightly reduced accuracy.

Then, the pose training unit 38 trains the machine learning model 26 by the training data generated in S305 and S306 (S307).

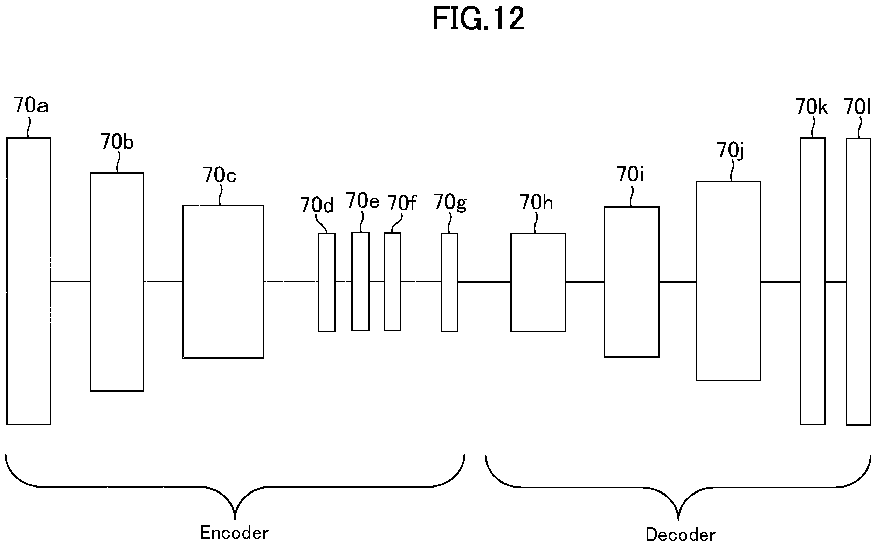

Details of the machine learning model 26 and a method for the learning are described. FIG. 12 is a diagram for illustrating an example of a configuration of the machine learning model 26. The machine learning model 26 illustrated in FIG. 12 is used at the time of the preliminary learning. The machine learning model 26 uses a model based on ResNet in an encoder unit, and includes a plurality of blocks 70a to 701. The image of the target region 55 is input to the block 70a, and the block 701 corresponds to an output layer. The blocks 70a to 70g correspond to a so-called encoder, and show a tendency that convolution causes a decrease in the area (width and height) of a feature map of each layer and an increase in the number of channels. Meanwhile, the blocks 70h to 70k correspond to a so-called decoder, and show a tendency that deconvolution causes an increase in the area of the feature map of each layer and a decrease in the number of channels. Instead of the deconvolution, a combination of upsampling (bilinear rescale) and convolution may be used. Each of the blocks 70a to 70k may have Conv2D, BatchNorm, and Activation layers. The blocks illustrated in FIG. 12 are actually connected to blocks other than the adjacent blocks, but description of details thereof is omitted.

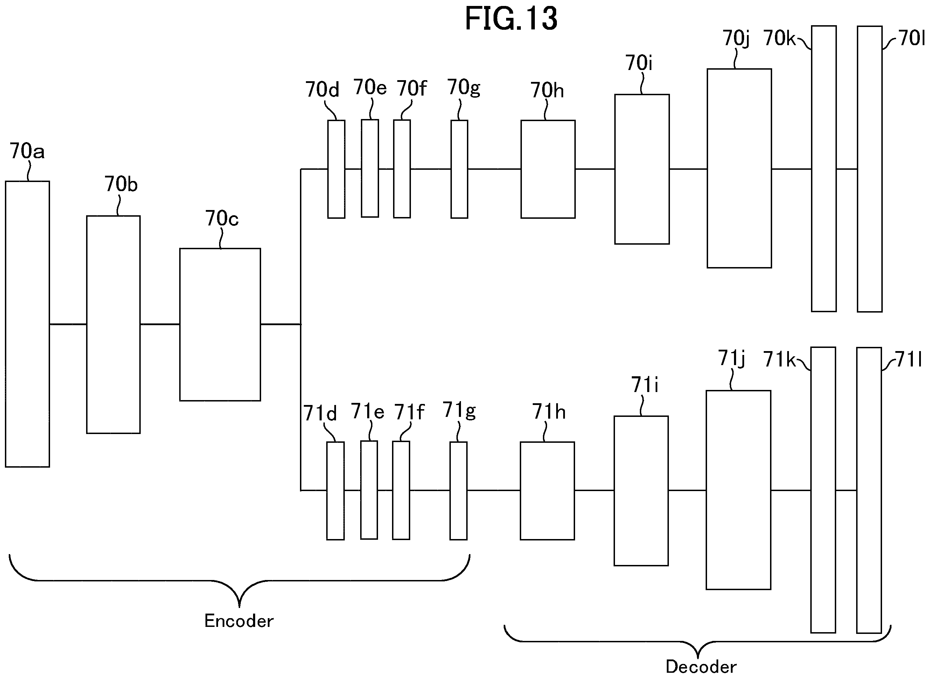

FIG. 13 is a diagram for illustrating a configuration of the machine learning model 26. The machine learning model 26 illustrated in FIG. 13 can perform output for a plurality of types of objects, and is used, for example, at the time of the learning of S307 of FIG. 10 after the preliminary learning. The blocks 70d to 701 and blocks 71d to 711 are present in the subsequent stage of the block 70c. For example, the blocks 70d to 701 are layers for outputting the positional image for one type of target object 51, and the blocks 71d to 711 are layers for outputting the positional image for another one type of target object 51.

Before the processing of FIG. 10 is executed, the pose training unit 38 trains the blocks 70a to 701 of the machine learning model 26 illustrated in FIG. 12 by preliminary training data including input images generated for a plurality of sample objects and the positional images indicating the positions of the key points of the sample objects. The plurality of sample objects include an object different from the target object 51.

Then, in S307, the pose training unit 38 sets the learned parameters for the blocks 70a to 701 of FIG. 12 in the blocks 70a to 701 of FIG. 13. The learned parameters for the blocks 70d to 701 of FIG. 12 may be set in the blocks 71d to 711 of FIG. 13. The pose training unit 38 also fixes the parameters for the blocks 70a to 70c, and trains the machine learning model 26 by the training data generated in S305 and S306. In this training, the pose training unit 38 trains the machine learning model 26 by adjusting the parameters for a neural network of the blocks 70d to 701 (blocks 71d to 711 as well in the example of FIG. 13). The learned parameters for the blocks 70d to 701 of FIG. 12 are used as initial values of the parameters in the learning, to thereby speed up the learning.

Common features of a large number of types of objects are learned in advance, and then performance is tuned in each individual network for each object, to thereby be able to reduce a time period and an amount of data to be required for training the machine learning model 26 and improve the performance of the machine learning model 26. When there is only one type of target object, the blocks 71d to 711 may be omitted. Blocks corresponding to the blocks 71d to 711 are provided in correspondence to the number of types of target objects. The pose training unit 38 may train the blocks 70a to 701 of the machine learning model 26 by the preliminary training data, and then the pose training unit 38 may fix the parameters for the blocks 70a to 70c and train the machine learning model 26 by the training data generated in S305 and S306. When the masked training image is used, the pose training unit 38 performs the training with only the unmasked region being used as an effective region.

The pose training unit 38 may perform the preliminary learning on the machine learning model 26 illustrated in FIG. 13. For example, a block group corresponding to the blocks 70d to 701 after branching may be provided in correspondence to the number of objects of a plurality of samples, and the machine learning model 26 may be subjected to the preliminary learning by training data corresponding to the configuration of the machine learning model 26. The training data may be, for example, training data including the image of a sample object and ground truth data for the block group corresponding to the object. In S307, the pose training unit 38 may set random parameters or the learned parameters for appropriate objects as initial values for the blocks 70d to 701 (or corresponding blocks) after branching. In addition, so-called meta-learning may be performed as the preliminary learning.

Meanwhile, after the photographed images have been acquired, the classification training unit 39 trains the classification model 23 by the training data based on the photographed images (S308).

The training data used in S308 includes the positive example training data and the negative example training data. The classification training unit 39 inputs the image in which the target object 51 has been photographed to the feature generating unit 31, and acquires the output feature value data, to thereby generate a plurality of pieces of positive example training data. In regard to a plurality of pieces of negative example training data, the classification training unit 39 inputs negative example sample images stored in advance in the storage unit 12 to the feature generating unit 31, and acquires the output feature value data, to thereby generate a plurality of pieces of negative example training data. The negative example sample images are images obtained through photographing by the photographing unit 20 in advance or images collected from the Web. In addition, positive example training data regarding another object may be used as the negative example training data. The negative example training data may be generated in advance to be stored in the storage unit 12. In this case, the classification training unit 39 may simply acquire the negative example training data stored in the storage unit 12. The classification training unit 39 trains the classifier 32 included in the classification model 23 by this training data.

The feature value to be used for generating the training data for the classifier 32 is extracted by the same processing as that of the feature generating unit 31 included in the classification model 23. The classification model 23 is trained through the learning of the classifier 32. The classification model 23 is not limited to the one described so far, and may be one that directly determines, from the image, presence or absence of the target object 51.

In this embodiment, the image to be input to the machine learning model 26 is limited by the processing of the target region acquisition unit 21 to an image of the region in which the target object 51 is present in the image obtained through photographing, the image having sufficiently high probability that the target object 51 is present in the center. In addition, the machine learning model 26 of the pose estimation unit 25 is trained by the training data generated by the three-dimensional shape model, while the classification model 23 of the target region acquisition unit 21 is trained based on the images in which the target object 51 has been photographed.

The images to be input to the machine learning model 26 are appropriately limited, to thereby improve the accuracy of the output of the machine learning model 26 and improve the accuracy of estimating the pose of the target object 51. In addition, the classification model 23 is trained based on the photographed image instead of the image based on the three-dimensional shape model, to thereby be able to select the target region 55 more accurately and to in turn improve the accuracy of the machine learning model 26.

In this embodiment, the photographed image for generating the three-dimensional shape model for training the machine learning model 26 of the pose estimation unit 25 is also used when the classification model 23 is trained. This reduces the time and labor required for photographing the target object 51, and also reduces the time required for the training of the machine learning model 26 and the classification model 23.

It should be noted that the present invention is not limited to the above-mentioned embodiment.

For example, the classifier 32 may be an SVM of any kernel. The classifier 32 may also be a classifier using a method, for example, a K-nearest neighbor method, a logistic regression, or a boosting method such as AdaBoost. Further, the classifier 32 may be implemented by, for example, a neural network, a naive Bayes classifier, a random forest, or a decision tree.

Further, the specific character strings and numerical values described above and the specific numerical values and character strings in the drawings are merely exemplary, and the present invention is not limited to those character strings and numerical values.

## Claims

1. An information processing system, comprising:
target region acquisition means for: acquiring an input image; determine whether or not the input image includes an image of a target object by inputting at least a part of the input image to a classification model trained based on a plurality of learning images including an image in which the target object has been photographed and label data indicating whether or not each of the plurality of learning images includes the target object; and acquiring a target region including the image of the target object, which is extracted from the input image, when the input image includes the target object; and
pose estimation means for estimating a pose of the target object based on information output by a machine learning model, when the acquired target region is input thereto, which is trained by: a plurality of training images rendered by a three-dimensional shape model of the target object; and ground truth data being information relating to the pose of the target object in the training images.

2. The information processing system according to claim 1,
wherein the target region acquisition means is configured to extract a region including an image of an object from the input image,
wherein the classification model includes:
a feature generating unit configured to generate a feature value of an image of at least a part of the extracted region; and
a classifier configured to receive input of the generated feature value, and output information indicating whether or not the extracted region has the image of the target object, and
wherein the classifier is trained by training data including feature values generated from the image in which the target object has been photographed and the label data.

3. The information processing system according to claim 2, wherein the feature generating unit is adjusted so that a distance between feature values generated from a plurality of images including the target object becomes smaller than a distance between the feature value generated from an image including the target object and a feature value generated from an image including an object different from the target object.

4. The information processing system according to any one of claims 1 to 3,
wherein the machine learning model is trained by training data including: the plurality of training images rendered by the three-dimensional shape model of the target object; and the ground truth data indicating positions of key points of the target object in the training images,
wherein the pose estimation means is configured to acquire information indicating two-dimensional positions of the key points of the target object in the target region by inputting the acquired target region to the machine learning model, and
wherein the pose estimation means is configured to estimate the pose of the target object based on the information indicating the two-dimensional positions of the key points and information indicating three-dimensional positions of the key points in the three-dimensional shape model.

5. The information processing system according to claim 4,
wherein the machine learning model is trained by a plurality of training images rendered by a three-dimensional model of the target object and ground truth images in which each of pixels indicates positional relationship with respect to the key point of the target object in the training images,
wherein the pose estimation means is configured to acquire a positional image in which each of pixels indicates the positional relationship with respect to the key point of the target object by inputting the acquired target region to the machine learning model,
wherein the pose estimation means is configured to calculate, based on the positional image, the position of the key point of the target object in the positional image, and
wherein the pose estimation means is configured to estimate the pose of the target object based on the calculated position of the key point in the positional image and the three-dimensional model.

6. The information processing system according to claim 5,
wherein the target region acquisition means is configured to generate a mask image for masking a region other than the image of the target object in the target region,
wherein the pose estimation means is configured to mask a part of the positional image based on the mask image, and
wherein the pose estimation means is configured to acquire, based on the masked positional image, the position of the key point of the target object in the positional image.

7. The information processing system according to any one of claims 1 to 6, further comprising:
photographed image acquisition means for acquiring a plurality of photographed images obtained through photographing from a plurality of directions with respect to the target object;
shape model generation means for calculating the three-dimensional shape model of the target object based on the plurality of photographed images; and
classification training means for training, by training data including the ground truth data and the input data corresponding to the plurality of photographed images, the classification model for determining whether or not the input image includes the image of the target object.

8. The information processing system according to claim 7,
wherein the shape model generation means is configured to generate information indicating the pose of the target object in the photographed image, and
wherein the information processing system further comprises pose training means for training the machine learning model by: the training images including a plurality of images rendered by the three-dimensional shape model and the plurality of photographed images; and the ground truth data being the information relating to the pose of the target object in the training images.

9. The information processing system according to claim 8, further comprising training data generation means for acquiring, from the plurality of photographed images obtained through photographing, a photographed image from which an image of a hand has been removed, and generating a training image including the photographed image from which the image of the hand has been removed and the ground truth data.

10. The information processing system according to any one of claims 1 to 9,
wherein the machine learning model includes a neural network formed of a plurality of layers including an input layer, an intermediate layer, and an output layer, and
wherein the machine learning model is trained in advance by preliminary training data including a plurality of training images regarding objects different from the target object and the ground truth data, and is then trained by the plurality of training images regarding the target object and the ground truth data with a parameter fixed for one or a plurality of layers excluding the output layer and including the input layer.

11. An information processing method, comprising the steps of:
acquiring an input image;
determining whether or not the input image includes an image of a target object by inputting at least a part of the input image to a classification model trained based on a plurality of learning images including an image in which the target object has been photographed and label data indicating whether or not each of the plurality of learning images includes the target object;
acquiring a target region including the image of the target object, which is extracted from the input image, when the input image includes the target object; and
estimating a pose of the target object based on information output by a machine learning model, when the acquired target region is input thereto, which is trained by: a plurality of training images rendered by a three-dimensional shape model of the target object; and ground truth data being information relating to the pose of the target object in the training images.

12. A program for causing a computer to execute the processes of:
acquiring an input image;
determining whether or not the input image includes an image of a target object by inputting at least a part of the input image to a classification model trained based on a plurality of learning images including an image in which the target object has been photographed and label data indicating whether or not each of the plurality of learning images includes the target object;
acquiring a target region including the image of the target object, which is extracted from the input image, when the input image includes the target object; and
estimating a pose of the target object based on information output by a machine learning model, when the acquired target region is input thereto, which is trained by: a plurality of training images rendered by a three-dimensional shape model of the target object; and ground truth data being information relating to the pose of the target object in the training images.
